# EUROPEAN PATENT APPLICATION

(11) **EP 4 464 525 A1**
(43) Date of publication of application: **20.11.2024**
(21) Application number: 22920054.8
(22) Date of filing: 23.12.2022
(51) Int. Cl.: B60G 17/015, B61F 5/10

(54) **ELECTRICALLY CONTROLLED INTELLIGENT HEIGHT VALVE FOR VEHICLE, AND CORRESPONDING VEHICLE**

(30) Priority: 13.01.2022 CN 202210035066
(71) Applicant: Knorr-Bremse Systems for Rail Vehicles (Suzhou) Co. Ltd., Suzhou city, Jiangsu 215151 (CN)
(72) Inventor: ZHANG, Pengfei, Suzhou city, Jiangsu 215151 (CN); JIN, Jianwei, Suzhou city, Jiangsu 215151 (CN)
(74) Representative: Prüfer & Partner mbB Patentanwälte · Rechtsanwälte
(86) International application number: PCT/CN2022/141268
(87) International publication number: WO 2023/134424

(57) **Abstract**

The present disclosure relates to an electric control leveling valve (1) for a vehicle, comprising: a vehicle height variation detection device (11), which is used for detecting a height variation of a vehicle body of the vehicle and generating a height variation electrical signal characterizing the height variation of the vehicle body; a control device (12), which generates a corresponding valve control command based on the height variation electrical signal; and a valve device (13), which is in gaseous coupling to a secondary suspension system of the vehicle and adjusts air mass of the secondary suspension system based on the valve control command. The present disclosure further relates to a corresponding vehicle, in particular a railway vehicle, comprising such an electric control leveling valve (1). According to some embodiments of the disclosure, the control can be made more flexible and active to facilitate diagnosis of faults of the electric control leveling valve, so that the valve can be replaced in time.

## Description

### TECHNICAL FIELD

The present disclosure relates to an electric control intelligent leveling valve for a vehicle, and a corresponding vehicle comprising the electric control intelligent leveling valve.

### BACKGROUND ART

In recent years, railway vehicles, in particular subway vehicles, have developed rapidly in urban transport due to their convenience. Meanwhile, owing to the progress of sensor technology and control technology, driverless autonomous driving technology has also developed rapidly in recent years. Railway vehicles, with their special application scenarios, are particularly suitable for driverless autonomous driving technology.

With the increasing demand for driverless autonomous driving, it is necessary to realize the autonomous operation and automatic system monitoring of the functional state of important components of the vehicle. A leveling valve is an important component in the railway vehicle for adjusting the height of the vehicle body, and it can ensure running stability of the vehicle on complex road sections and provide passengers with a comfortable and stable vehicle environment on routes with a greatly varying passenger flow. However, the existing leveling valve design is incapable of allowing the system to perceive the operating state of the component during the driverless autonomous driving process.

As a result, there is a lack of the capability of active and flexible adjustment. Moreover, when a fault or even damage occurs, it cannot be perceived by the system in time, causing an extremely adverse effect on the control of the entire railway vehicle.

For this reason, corresponding improvements are urgently needed.

### SUMMARY OF THE INVENTION

In view of one of the aforementioned technical problems and other possible technical problems, an aim of the present disclosure is to provide an electric control leveling valve for a vehicle and a corresponding vehicle comprising the electric control leveling valve.

According to a first aspect of the present disclosure, there is provided an electric control leveling valve for a vehicle, comprising: a vehicle height variation detection device, which is used for detecting a height variation of a vehicle body of the vehicle and generating a height variation electrical signal characterizing the height variation of the vehicle body; a control device, which generates a corresponding valve control command based on the height variation electrical signal; and a valve device, which is in gaseous coupling to a secondary suspension system of the vehicle and adjusts air mass of the secondary suspension system based on the valve control command.

According to an optional embodiment of the present disclosure, the electric control leveling valve further comprises a pressure sensor, which is used for detecting air pressure of the secondary suspension system; and/or the vehicle is a railway vehicle.

According to an optional embodiment of the present disclosure, the vehicle height variation detection device is constructed as a rotary detection device, which performs detection by converting the height variation of the vehicle body into a rotary motion; and/or the valve device comprises a first valve and a second valve, which are configured to control inflation and deflation of the secondary suspension system.

According to an optional embodiment of the present disclosure, the first valve and/or the second valve are solenoid valves; and/or the first valve and the second valve are arranged side by side.

According to an optional embodiment of the present disclosure, the vehicle height variation detection device comprises a drive rod and an encoder, wherein the drive rod is connected to the vehicle body and is thus rotatable with the height variation of the vehicle body, and the encoder is configured to be driven by the drive rod to generate the height variation electrical signal.

According to an optional embodiment of the present disclosure, the encoder is a photoelectric encoder.

According to an optional embodiment of the present disclosure, the electric control leveling valve further comprises a housing, wherein at least a portion of at least one of the vehicle height variation detection device, the control device, the valve device and the pressure sensor is disposed within the housing.

According to an optional embodiment of the present disclosure, the electric control leveling valve further comprises a top cover which is mounted to the housing; and/or the housing is provided with an air inlet and an air outlet, and the air inlet is provided with an air inlet fitting.

According to an optional embodiment of the present disclosure, the electric control leveling valve further comprises an electrical connector arranged on the top cover; and/or the top cover is provided with a through-hole structure for accommodating the vehicle height variation detection device; and/or the top cover is mounted to the housing in a sealed manner via a sealing gasket; and/or the top cover is fixed to the housing via a fastener.

According to an optional embodiment of the present disclosure, the housing has a square profile with an open top, the air inlet is arranged at a first side surface of the housing, and the air outlet is arranged at a second side surface of the housing adjacent to the first side surface; and/or the electrical connector is arranged at one lateral side of the top cover; and/or the top cover is provided with a boss at a top position corresponding to the electrical connector.

According to an optional embodiment of the present disclosure, the control device is further configured to be capable of determining a working state of the valve device at least based on the air mass of the secondary suspension system and the height variation electrical signal during adjustment of the height of the vehicle body; and/or the control device is further configured to monitor actions of the valve device.

According to an optional embodiment of the present disclosure, the working state of the valve device is determined by comparing the air mass of the secondary suspension system with the height variation electrical signal; and/or monitoring of actions of the valve device includes counting a number of actions of the valve device.

According to an optional embodiment of the present disclosure, the control device is further configured to diagnose a health status of the electric control leveling valve by monitoring the vehicle height variation detection device and/or the valve device and/or the pressure sensor.

According to an optional embodiment of the present disclosure, the health status includes faults and/or a remaining service life; and/or diagnosis of the health status of the electric control leveling valve further introduces historical data of the electric control leveling valve and/or relevant data of other electric control leveling valves of the same type as the electric control leveling valve.

According to a second aspect of the present disclosure, there is provided a vehicle, which comprises the electric control leveling valve and a secondary suspension system, wherein the electric control leveling valve is used for controlling the secondary suspension system.

According to some embodiments of the present disclosure, the control can be made more flexible and active to facilitate diagnosis of faults of the electric control leveling valve, so that the valve can be replaced in time.

Particularly, according to some embodiments of the present disclosure, an intelligent leveling valve is provided, which can autonomously adjust and stabilize the height of the vehicle body according to the height variation of the vehicle, and manage the system pressure of the secondary suspension system, the working state and practical service life, etc. of the leveling valve per se in an integrated manner, and it can be monitored by the driving or braking system of the railway vehicle.

### BRIEF DESCRIPTION OF THE DRAWINGS

The principles, characteristics, and advantages of the present disclosure can be better understood through the detailed description below in conjunction with the accompany drawings, in which:
FIG. 1 shows an exploded view of an electric control leveling valve for a vehicle according to an exemplary embodiment of the present disclosure;
FIG. 2 shows a perspective view of the electric control leveling valve shown in FIG. 1 in an assembled state;
FIG. 3 shows a front view of the electric control leveling valve shown in FIG. 2;
FIG. 4 shows a top view of the electric control leveling valve shown in FIG. 2;
FIG. 5 shows a rear view of the electric control leveling valve shown in FIG. 2;
FIG. 6 shows a right view of the electric control leveling valve shown in FIG. 2;
FIG. 7 shows a left view of the electric control leveling valve shown in FIG. 2; and
FIG. 8 shows a longitudinal sectional view of the electric control leveling valve shown in FIG. 2.

### DETAILED DESCRIPTION OF EMBODIMENTS

For a clearer understanding of the technical problems to be solved, technical solutions and advantageous technical effects of the present disclosure, the disclosure will be described below in greater detail in conjunction with the drawings and a number of exemplary embodiments. It is to be understood that specific embodiments described herein are merely for explaining the disclosure, rather than limiting the scope thereof.

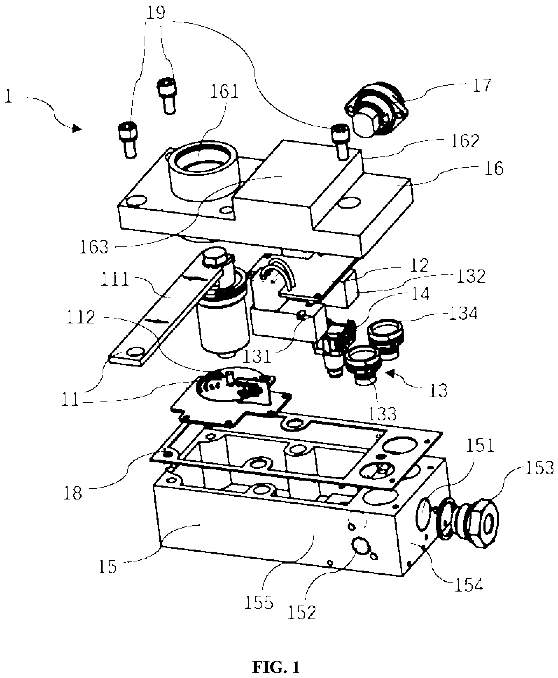

First, according to a first aspect of the present disclosure, as shown in FIG. 1, there is provided an electric control leveling valve 1 for a vehicle, in particular a railway vehicle, wherein the electric control leveling valve 1 comprises: a vehicle height variation detection device 11 for detecting a height variation of a vehicle body of the vehicle and generating a height variation electrical signal characterizing the height variation of the vehicle body; a control device 12, which generates a corresponding valve control command based on the height variation electrical signal; and a valve device 13, which is in gaseous coupling to a secondary suspension system of the vehicle and adjusts air mass of the secondary suspension system based on the valve control command. The secondary suspension system comprises an air spring.

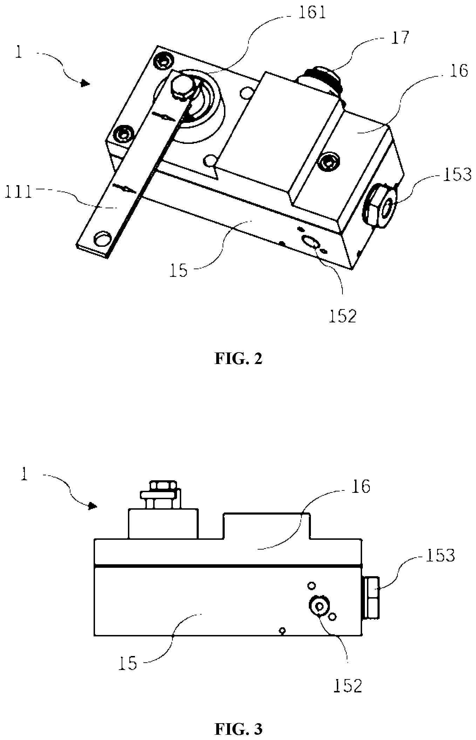

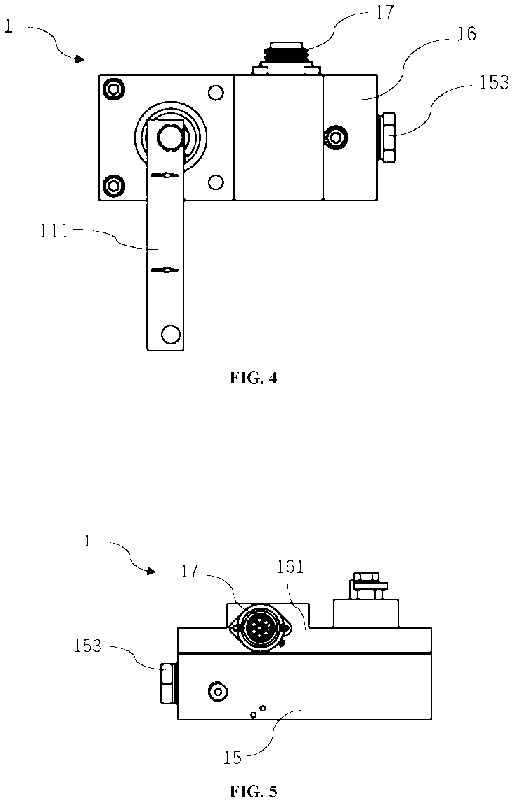

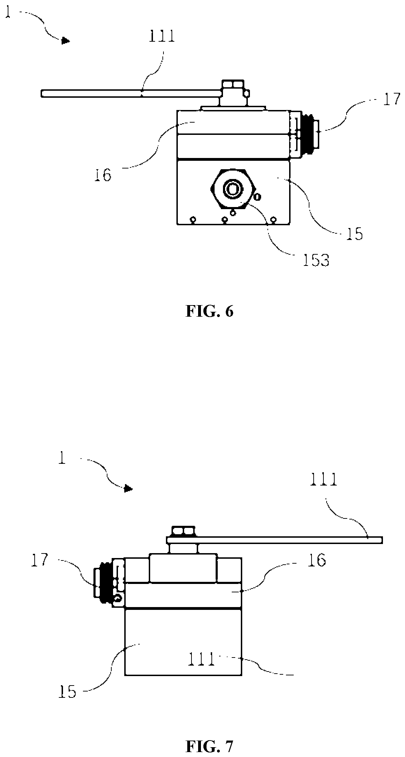

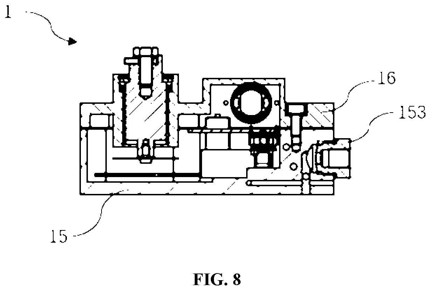

For greater clarity and the need of the possible description below, FIG. 2 shows a perspective view of the electric control leveling valve shown in FIG. 1 in an assembled state. FIG. 3 shows a front view of the electric control leveling valve shown in FIG. 2. FIG. 4 shows a top view of the electric control leveling valve shown in FIG. 2. FIG. 5 shows a rear view of the electric control leveling valve shown in FIG. 2. FIG. 6 shows a right view of the electric control leveling valve shown in FIG. 2. FIG. 7 shows a left view of the electric control leveling valve shown in FIG. 2. FIG. 8 shows a longitudinal sectional view of the electric control leveling valve shown in FIG. 2.

It can be seen that the electric control leveling valve 1 of the present disclosure divides the detection of the height variation of the vehicle body and the control of the valve device 13 into two parts, and the two parts can be associated with each other via a control program to flexibly adjust control parameters, thereby configuring a leveling valve with different characteristics. In the existing mechanical leveling valve, the height variation of the vehicle body is directly converted into a state of the valve device, creating an only corresponding relationship that cannot be adjusted.

Here, how to control the valve device 3 according to the height variation of the vehicle body, that is, how to generate the corresponding valve control command according to the height variation of the vehicle body can be calibrated in advance through experiments, simulations, etc., and other signals, such as air mass of the secondary suspension system, can also be introduced for feedback control.

According to an exemplary embodiment of the present disclosure, the electric control leveling valve 1 may further comprise a pressure sensor 14 for detecting air pressure of the secondary suspension system. This makes feedback control possible, and it can be used to help diagnose a health status of the electric control leveling valve 1. Please refer to the following description for details.

According to an exemplary embodiment of the present disclosure, as shown in FIG. 1, the vehicle height variation detection device 11 may be constructed as a rotary detection device, which performs detection by converting the height variation of the vehicle body into a rotary motion.

According to an exemplary embodiment of the present disclosure, as shown in FIG. 1, the valve device 13 comprises a first valve 131 and a second valve 132 configured to control inflation and deflation of the secondary suspension system. The first valve 131 and the second valve 132 are coordinated in action to control the inflation and deflation process of the secondary suspension system. For example, it is possible to configure the first valve 131 for deflation control while the second valve 132 for inflation control.

According to an exemplary embodiment of the present disclosure, the first valve 131 and/or the second valve 132 are solenoid valves used for controlling the inflation and deflation of the secondary suspension system, and they may also be used in coordination with other valves to amplify a flow rate to adapt to a wider range of working applications, in which case the coordinated actions of other valves may also be required. Preferably, the valve device 13 may further comprise a first flow amplification inflation and deflation control piston valve 133 and/or a second flow amplification inflation and deflation control piston valve 134 to coordinate with the first valve 131 and/or the second valve 132 to control the inflation and deflation process of the secondary suspension system. According to an exemplary embodiment of the present disclosure, the first valve 131 and the second valve 132 are arranged side by side, and the first flow amplification inflation and deflation control piston valve 133 and the second flow amplification inflation and deflation control piston valve 134 are arranged side by side.

According to an exemplary embodiment of the present disclosure, as shown in FIG. 1, the first valve 131 and the second valve 132 are arranged side by side.

According to an exemplary embodiment of the present disclosure, the vehicle height variation detection device 11 may comprise a drive rod 111 and an encoder 112, wherein the drive rod 111 is connected to the vehicle body and is thus rotatable with the height variation of the vehicle body, and the encoder 112 can be driven by the drive rod 111 to generate a height variation electrical signal. In other words, the encoder 112 can determine the height variation of the vehicle body by driving a rotary body (see FIG. 1) to rotate via the drive rod 111.

According to an exemplary embodiment of the present disclosure, the encoder 112 may be a photoelectric encoder.

According to an exemplary embodiment of the present disclosure, the electric control leveling valve 1 may further comprise a housing 15, wherein at least a portion of at least one of the vehicle height variation detection device 11, the control device 12, the valve device 13 and the pressure sensor 14 is disposed within the housing 15. Particularly, a portion (such as the drive rod 111) of the vehicle height variation detection device 11, as well as the control device 12, the valve device 13 and the pressure sensor 14 are all arranged within the housing 15.

Preferably, the housing 15 serves as a valve body here, and it can be internally built with a part of a gas circuit.

According to an exemplary embodiment of the present disclosure, the electric control leveling valve 1 may further comprise a top cover 16, which is mounted to the housing 15. In this case, the top cover 16 and the housing 15 form a relatively closed accommodating space.

Preferably, a part of the gas circuit of the electric control leveling valve 1 may also be built within the top cover 16.

According to an exemplary embodiment of the present disclosure, the housing 15 may be provided with an air inlet 151 and an air outlet 152, and an air inlet fitting 153 is provided at the air inlet 151. The air inlet 151 may be connected to an air source via the air inlet fitting 153.

According to an exemplary embodiment of the present disclosure, the electric control leveling valve 1 may further comprise an electrical connector 17 arranged on the top cover 16. The electrical connector 17 may be connected to a power source and may preferably communicate with a control system of the vehicle.

According to an exemplary embodiment of the present disclosure, the top cover 16 may be provided with a through-hole structure 161 for accommodating the vehicle height variation detection device 11, whereby the rotation of the drive rod 111 located outside the housing 15 can be transmitted to the encoder 112 located inside the housing 15.

According to an exemplary embodiment of the present disclosure, the top cover 16 may be mounted to the housing 15 in a sealed manner via a sealing gasket 18, which means that the sealing gasket 18 is provided between the top cover 16 and the housing 15. In this way, associated electrical components can be sealed in the accommodating space, thereby providing a batter protection for internal electrical components.

According to an exemplary embodiment of the present disclosure, the top cover 16 may be fixed to the housing 15 by a fastener 19, such as a screw (as an example, three screws are shown in FIG. 1).

Preferably, the housing 15 may have a square profile with an open top, as shown in FIG. 1, where the air inlet 151 is arranged at a first side surface 154 of the housing 15, and the air outlet 152 is arranged at a second side surface 155 of the housing 15 adjacent to the first side surface 154. Preferably, the air inlet 151 is arranged at a narrower side surface, while the air outlet 152 is arranged at a wider side surface.

According to an exemplary embodiment of the present disclosure, as shown in FIG. 1, the electrical connector 17 may be provided at one lateral side 162 of the top cover 16.

According to an exemplary embodiment of the present disclosure, as shown in FIG. 1, the top cover 16 is provided with a boss 163 at a top position corresponding to the electrical connector 17. In this way, a larger area can be provided for installation of the electrical connector 17.

According to an exemplary embodiment of the present disclosure, the control device 12 may be further configured to be capable of determining a working state of the valve device 13 at least based on the air mass of the secondary suspension system and the height variation electrical signal during adjustment of the height of the vehicle body. This is because that in a normal state, the air mass of the secondary suspension system inevitably changes as long as the valve device 13 is in operation, and whether the valve device 13 is started or not is related to the height variation electrical signal of the vehicle body.

According to an exemplary embodiment of the present disclosure, the control device 12 may be further configured to monitor actions of the valve device 13. In this way, the state of the valve device 13 itself or even other components can be determined based on determination of the actions of the valve device 13, such as whether the first valve 131 and/or the second valve 132 have reached an expected number of actions. Therefore, according to an exemplary embodiment of the present disclosure, monitoring of actions of the valve device 13 includes counting a number of actions of the valve device 13.

As described above, the working state of the valve device 13 may be determined by comparing the air mass of the secondary suspension system with the height variation electrical signal.

According to an exemplary embodiment of the present disclosure, the control device 12 may be further configured to diagnose a health status of the electric control leveling valve 1 by monitoring the vehicle height variation detection device 11 and/or the valve device 13 and/or the pressure sensor 14.

According to an exemplary embodiment of the present disclosure, the health status may include faults and/or a remaining service life.

According to an exemplary embodiment of the present disclosure, diagnosis of the health status of the electric control leveling valve 1 may further introduce historical data of the electric control leveling valve 1 and/or relevant data of other electric control leveling valves of the same type as the electric control leveling valve 1. In this way, historical data and other relevant data can be brought into full play, and the use of big data for determination and analysis can greatly improve the accuracy of diagnosis and render the electric control leveling valve 1 more intelligent.

It can be seen that a highly integrated intelligent leveling valve is provided here, which uses an encoder, such as a photoelectric encoder, in an integrated manner to detect and characterize the height variation of the secondary suspension system of the railway vehicle (i.e., the height variation of the vehicle body), and automatically adjusts the height of the secondary suspension system of the vehicle body through a built-in control device according to the signal characterizing the height variation; and meanwhile it may be further provided with a built-in pressure sensor, and monitoring of its own functions and calculation of an expected service life can be achieved through an optimization algorithm.

Particularly, the electric control leveling valve can be designed in such a manner that it is compatible with the existing leveling valves of railway vehicles, thereby saving the need to change the design of the corresponding parts of the railway vehicle.

Also, the vehicle operation system is allowed to perceive the state of the leveling valve during driverless operation while ensuring the function of automatically adjusting the vehicle height of the existing leveling valves, and a pre-warning of the service life limit of the leveling valve can be issued to avoid failure and reduce maintenance costs.

According to a second aspect of the present disclosure, there is provided a vehicle, which comprises the electric control leveling valve 1 and the secondary suspension system, wherein the electric control leveling valve 1 may be used for controlling the secondary suspension system.

While specific embodiments of the present disclosure have been described in detail here, they have been presented only for the purpose of explanation and should not be construed as limitations on the scope of the disclosure. Various substitutions, changes and modifications can be devised without deviating from the spirit and scope of the present disclosure.

## Claims

1. An electric control leveling valve (1) for a vehicle, comprising:
a vehicle height variation detection device (11), which is used for detecting a height variation of a vehicle body of the vehicle and generating a height variation electrical signal characterizing the height variation of the vehicle body;
a control device (12), which generates a corresponding valve control command based on the height variation electrical signal; and
a valve device (13), which is in gaseous coupling to a secondary suspension system of the vehicle and adjusts air mass of the secondary suspension system based on the valve control command.

2. The electric control leveling valve (1) according to claim 1, wherein
the electric control leveling valve (1) further comprises a pressure sensor (14), which is used for detecting air pressure of the secondary suspension system; and/or
the vehicle is a railway vehicle.

3. The electric control leveling valve (1) according to claim 1 or 2, wherein
the vehicle height variation detection device (11) is constructed as a rotary detection device, which performs detection by converting the height variation of the vehicle body into a rotary motion; and/or
the valve device (13) comprises a first valve (131) and a second valve (132), which are configured to control inflation and deflation of the secondary suspension system.

4. The electric control leveling valve (1) according to claim 3, wherein
the first valve (131) and/or the second valve (132) are solenoid valves; and/or
the first valve (131) and the second valve (132) are arranged side by side.

5. The electric control leveling valve (1) according to any one of claims 1 to 4, wherein
the vehicle height variation detection device (11) comprises a drive rod (111) and an encoder (112), wherein the drive rod (111) is connected to the vehicle body and is thus rotatable with the height variation of the vehicle body, and the encoder (112) is configured to be driven by the drive rod (111) to generate the height variation electrical signal.

6. The electric control leveling valve (1) according to claim 5, wherein
the encoder (112) is a photoelectric encoder.

7. The electric control leveling valve (1) according to any one of claims 1 to 6, wherein
the electric control leveling valve (1) further comprises a housing (15), wherein at least a portion of at least one of the vehicle height variation detection device (11), the control device (12), the valve device (13) and the pressure sensor (14) is disposed within the housing (15).

8. The electric control leveling valve (1) according to claim 7, wherein
the electric control leveling valve (1) further comprises a top cover (16), which is mounted to the housing (15); and/or
the housing (15) is provided with an air inlet (151) and an air outlet (152), and the air inlet (151) is provided with an air inlet fitting (153).

9. The electric control leveling valve (1) according to claim 8, wherein
the electric control leveling valve (1) further comprises an electrical connector (17) arranged on the top cover (16); and/or
the top cover (16) is provided with a through-hole structure (161) for accommodating the vehicle height variation detection device (11); and/or
the top cover (16) is mounted to the housing (15) in a sealed manner via a sealing gasket (18); and/or
the top cover (16) is fixed to the housing (15) via a fastener (19).

10. The electric control leveling valve (1) according to claim 9, wherein
the housing (15) has a square profile with an open top, the air inlet (151) is arranged at a first side surface (154) of the housing (15), and the air outlet (152) is arranged at a second side surface (155) of the housing (15) adjacent to the first side surface (154); and/or
the electrical connector (17) is arranged at one lateral side (162) of the top cover (16); and/or
the top cover (16) is provided with a boss (163) at a top position corresponding to the electrical connector (17).

11. The electric control leveling valve (1) according to any one of claims 1 to 10, wherein
the control device (12) is further configured to be capable of determining a working state of the valve device (13) at least based on the air mass of the secondary suspension system and the height variation electrical signal during adjustment of the height of the vehicle body; and/or
the control device (12) is further configured to monitor actions of the valve device (13).

12. The electric control leveling valve (1) according to claim 11, wherein
the working state of the valve device (13) is determined by comparing the air mass of the secondary suspension system with the height variation electrical signal; and/or
monitoring of actions of the valve device (13) includes counting a number of actions of the valve device (13).

13. The electric control leveling valve (1) according to claim 12, wherein
the control device (12) is further configured to diagnose a health status of the electric control leveling valve (1) by monitoring the vehicle height variation detection device (11) and/or the valve device (13) and/or the pressure sensor (14).

14. The electric control leveling valve (1) according to claim 13, wherein
the health status includes faults and/or a remaining service life; and/or
diagnosis of the health status of the electric control leveling valve (1) further introduces historical data of the electric control leveling valve (1) and/or relevant data of other electric control leveling valves of the same type as the electric control leveling valve (1).

15. A vehicle, which comprises an electric control leveling valve (1) according to any one of claims 1 to 14 and a secondary suspension system, wherein the electric control leveling valve (1) is used for controlling the secondary suspension system.
